# EUROPEAN PATENT SPECIFICATION

(11) **EP 1 456 568 B1**
(45) Date of publication and mention of the grant of the patent: **18.04.2007**
(21) Application number: 02789067.2
(22) Date of filing: 20.11.2002
(51) Int. Cl.: F16K 1/02

(54) **VALVE, PARTICULARLY BALANCING VALVE FOR CENTRAL HEATING PLANTS**
VENTIL, INSBESONDERE AUSGLEICHSVENTIL FÜR ZENTRALHEIZUNGSANLAGEN
VANNE, NOTAMMENT VANNE D'EQUILIBRAGE POUR INSTALLATIONS DE CHAUFFAGE CENTRAL

(30) Priority: 22.11.2001 SE 0103925
(43) Date of publication of application: 15.09.2004
(73) Proprietor: Tour & Andersson AB, 524 80 Ljung (SE)
(72) Inventor: LENBERG, Lars, S-465 00 Nossebro (SE); RYDEN, Claes, S-523 00 Ulricehamn (SE)
(74) Representative: Alton, Andrew
(86) International application number: PCT/SE2002/002103
(87) International publication number: WO 2003/044403

(56) References cited:
- WO-A1-92/03677
- US-A- 3 098 637

## Description

The present invention relates to a valve of the type described in detail in the preamble of claim 1.

Such valves are used primarily to preadjust the flow through and balance the fall of pressure over a loop in a central heating plant.

Known valves, used for this purpose, are mainly satisfactory, but they have several drawbacks as regards the manufacturing and mounting time and expenses, mode of operation, adjustment and exchange possibilities as well as life.

The object of the present invention is, in the above-mentioned respects, to improve the known valves in this field and also, in additional respects, to develop the art in this field.

This object is attained according to the invention by means of a valve of the type described above, which is characterized by what is set forth in the characterizing clause of claim 1.

Additional characterizing features of and advantages of the invention are set forth in the following description, reference being made to the accompanying drawings, which show a preferred but not limiting embodiment in diametrical axial sections. The drawings show in detail in:

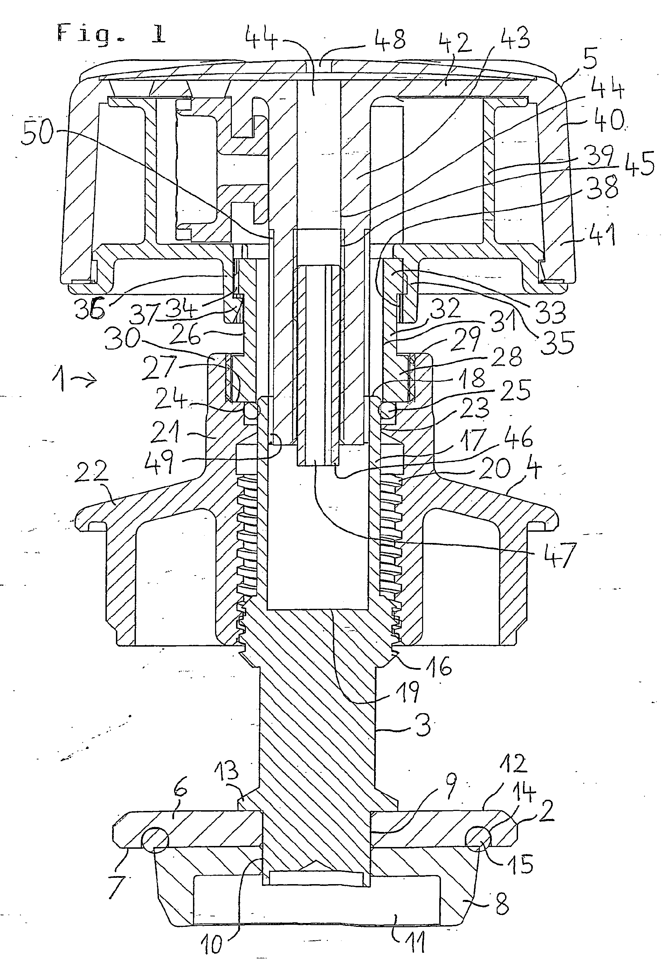

Fig. 1 a cone, a spindle, a top piece and a handwheel of a valve according to the invention and

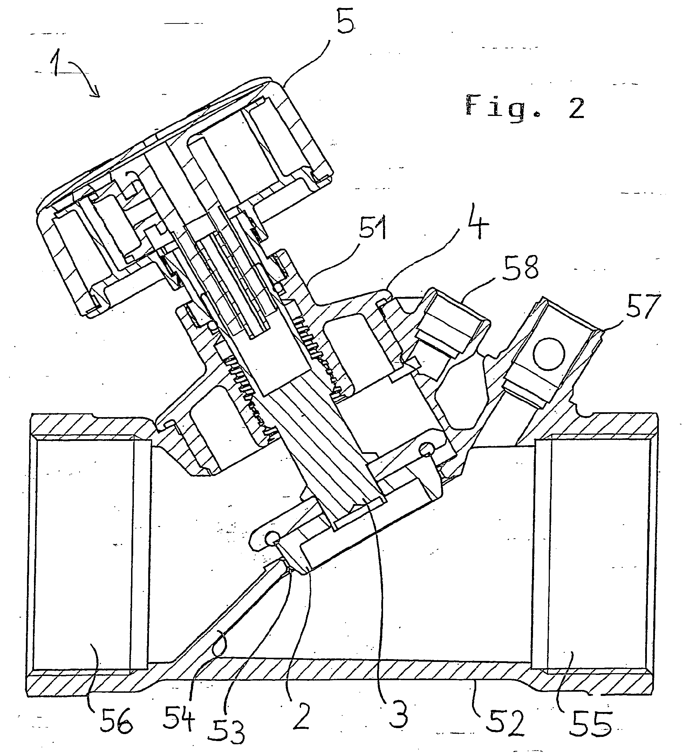

Fig. 2 the valve according to Fig. 1, mounted in a valve housing.

A valve 1 according to the invention is shown in the drawings in its entirety. Its main parts are a valve body or cone 2, a spindle 3, a top piece 4 and a handwheel 5. These parts form a unit, which can be inserted into a socket 51 in a valve housing 52 having a seat 53 in a diaphragm 54 between an inlet 55 and an outlet 56. The housing suitably also has nipple sockets 57 and 58, designed to connect measuring nipples and multiple function nipples respectively to the inlet and the outlet respectively.

A cone 2, active in relation to seat 53, preferably has an upper plate 6, towards lower side 7 of which a guide and sealing plate 8 abuts, which has a somewhat smaller diameter. The two plates are, by means of central bores 9 and 10 and by slip and press fit, inserted onto the lower end of the spindle and secured in their positions in a suitable way, e.g. by allowing the free spindle end to reach with a certain distance into a cavity 11 in the lower side of plate 8 and be bent there, whereas upper side 12 of plate 6 abuts a flange 13 on the spindle end. It is of course also possible to thread plate 8 and/or plate 6 onto the spindle and it may be suitable to make the connection between the spindle and the cone releasable, making it possible to exchange the cone entirely or partly. Plates 6 and 8 can of course be designed in one piece, possibly including the spindle. In case plate 8 and plate 6 are designed separate from each other, there is suitably a downwardly open ring groove 14 in the lower side of plate 6, designed to receive an O-ring 15, which in a not loaded condition projects outwards a small distance from the groove, which partially, e.g. by halves, is covered by the peripheral area of the upper side of plate 8. In this way the O-ring will, when plate 8 and plate 6 are joined to each other, be compressed and excess material will penetrate through the not covered part of the groove. The drawing shows symbolically the constricted portion. The free and towards the surroundings exposed part of the O-ring is designed , when the valve is completely closed, to seal against the inner upper edge of said seat. Such a sealing effect is satisfactory and reliable. Also, this design allows the O-ring to be exchanged.

A spindle 3 is in its central part, seen in the longitudinal direction, provided with a suitably short outer thread 16 and is within this area suitably thicker. Above the thread upper spindle part 17 has a flat outer side and is provided with an axial blind hole 19 on its interior side, which blind hole has its origin in upper free end 18. At least the mouth area of the blind hole is provided with an axial toothing 49.

A top piece 4 is screwed onto the spindle thread with an inner thread 20 in a socket or socket-like part 21, which is surrounded by a flange-like part 22, by means of which the top piece is inserted into and fastened to said valve housing. Whereas inner thread 20 is formed in that part of socket 21, which faces the cone, the axial continuation upwards of the socket mainly forms a short constriction 23, in which spindle part 17 is guided with slip fit and to which upwards an upwardly open ring groove 24 is connected, in which an O-ring 25 is inserted, which is designed to be compressed, between the radial groove wall and spindle part 17 in order to obtain an efficient sealing effect. Groove 24 is sealed from above by one end surface 27 of a spacing piece 26, which with its lower, suitably flange-like end 28 is screwed into a step bore 29 in upper end 30 of socket 21. Bore 28 suitably has a larger diameter than groove 24 and the spacing piece is provided with a through axial bore 31, along which spindle part 17 can move, e.g. with slip fit.

A spacing piece 26 has a neck 32 and an upper, flange-like end 33, which along its periphery is provided with an axial toothing 34 and which is designed to hold handwheel 5 in place.

A handwheel 5, which mainly is made of a plastic material, is by means of a lower socket 35 inserted onto upper end 33 of the spacing piece, the socket in a few places along its periphery suitably being slit to form tongues 36 with inwardly directed claws 37, which surround upper end 33 of the spacing piece and prevent the handwheel from being drawn out. The inner side of the socket and suitably also the tongues is provided with an axial toothing 38, which matches the described toothing of the spacing piece. In this way the handwheel can be mounted on the spacing piece in a certain adjustment position, which is secured thanks to the toothing. The toothings and the adjacent parts respectively can be provided with bevels, which facilitates the bringing together of the same.

The handwheel part, described so far, is a handwheel body 39, on which a handwheel cover 40 is mounted having a peripheral wall 41 and an end wall 42, from which a dowel 43 projects outwards and through bore 31 of the spacing piece as well as into blind hole 19 of the spindle, which dowel is provided with a central, axial through cavity 44, that part of which, which faces the spindle, being provided with a thread 45, designed to receive a threaded bolt 46 with an axial, e.g. through hexagon opening 47 to allow an adjustment tool (not shown) to be inserted, which can be introduced into the handwheel through a hole 48 in wall 42. Bolt 46 functions as a stop element for the opening movement of the cone. The cone can be moved, since the outer side of dowel 43 is provided with an axial toothing 50, which matches toothing 49 of blind hole 19. The adjustment suitably is done by moving the cone into the desired functional position, e.g. by means of the handwheel and the measuring equipment, connected to said nipples, bolt 46 subsequently being screwed towards the bottom of the blind hole. Then the cone can be arbitrarily moved between the adjusted desired functional position and a fully closed position without any new measuring and special adjustment respectively, since the desired functional position is the stop position, obtained by the bolt, and is reached through an opening movement of the handwheel up to the stop surface of the blind hole bottom against the bolt.

Such a valve constriction has many advantages. Thus, it comprises only relatively few details, which may result in lower costs and an improved adjustment precision. The force, which the cone is subjected to in the closed and in a partially closed position respectively, is absorbed by the top piece instead of the handwheel. The spindle is tight, which means, that there is no exterior leakage via the preadjustment and the maximum limitation element (bolt 46). Only one statically cramped sealing element (O-ring 25) is used in order to prevent leakage. Bolt 46 is not required to have a sealing function. The handwheel constriction and the mounting of a spacing piece respectively and their characteristics allow the handwheel to be exchanged without requiring any new preadjustment.

The thread of the spindle transfers the sealing force from the cone to the top piece. The spacing piece functions as a part of the packing box for O-ring 25 and renders at the same time a quick mounting of the handwheel possible by means of a snap-in-function, which also results in a simple machine equipment for a fast automatic handwheel mounting. Thus, the spacing piece fixedly fastened to the top piece will not be turned or rotated, when the spindle is moved in an axial direction. At the same time as the handwheel is fixedly fastened in a certain definite position to the spacing piece, the handwheel is also fixedly fastened in a certain definite position to the spindle, which results in an advantageous double function, which additionally benefits the security, simplicity, speed etc. O-ring 25 and parts located above it can be exchanged also in operation.

The invention is not limited to the embodiments described above and shown in the drawings but can be modified and supplemented in an arbitrary way within the scope of the following claims :

## Claims

1. A valve (1), particularly a balancing valve for central heating plants, which comprises a valve body or cone (2), fastened to one end of a spindle (3), guided in a top piece (4), the other end of the spindle supporting a handwheel (5), the cone being designed to be preadjusted before being finally adjusted against a seat, mounted in a valve housing, **characterized in that** the spindle's (3) central part in relation to its length is provided with a preferably short outer threading (16) and is with this portion, on the valve body side, inserted into an inner threading (20) in a connector or connector-like part (21) in said top piece (4), that said connector or the like (21) is surrounded by a flange-like part (22), by means of which said top piece (4) is inserted into and retained in said valve housing, that the axial continuation of said connector or the like (21), on the handwheel side, forms a short constriction (23)), in which the free end of said spindle (3), which end is formed smooth on the outside, is guided axially displaceable with slip fit, and that said spindle (3) is connected to the handwheel (5), in order to transfer movements, via a dowel (43), which projects from the handwheel, and **in that** the free end of said dowel is relatively displaceably guided in a blind hole (19) in the end (18) of the spindle close to said handwheel.

2. A valve according to claim 1, **characterized in that** the mouth region of the blind hole (19) is provided with an axial interior toothing (49), into which said handwheel dowel (43) is inserted with a matching outer toothing (50).

3. A valve according to claim 1 or 2, **characterized in that** the cone (2), as known per se, has an upper plate (6), against the lower side (7) of which a guide and sealing plate (8) with a somewhat smaller diameter abuts, and **in that** in the lower side of the plate (6) a downwardly open ring groove (14) is provided, designed to receive an O-ring (15), which in an unloaded condition projects outwards a certain distance from the groove, half of which is covered by the peripheral area of the upper side of the plate (8), and that said O-ring (15) is provided to be compressed and make excess material to be pushed out of the non-covered part of said ring groove (14).

4. A valve according to any of claims 1-3, **characterized in that** said upper plate (6) and said sealing plate (8) by means of central bores (9 and 10) with slip or press fit are fitted onto the lower end of the spindle and secured in their positions, e.g. by allowing the free spindle end to be extended a small distance into a cavity (11) in the lower side of the sealing plate (8) and by bending it there, whereas the upper side (12) of the upper plate (6) abuts a flange (13) on the end of the spindle, and/or **in that** the sealing plate (8) and/or the upper plate (6) are threaded onto the spindle, and **in that** the joint between the spindle and the cone preferably is designed detachable, which allows the cone to be fully or partially exchanged.

5. Valve according to claim 1, **characterized in that** the spindle (3) is thickened in the region of said outer thread (16).

6. A valve according to claim 5, **characterized in that** to said constriction (23) upwards an upwardly open ring groove (24) is connected, into which an O-ring (25) is inserted, which is designed to be compressed between the radial groove wall and said spindle part (17) in order to obtain an efficient sealing effect, **in that** the groove (24) from above is covered by one of the end surfaces (27) on a spacing piece (26), which with its lower, suitably flange-like end (28) is screwed into a step bore (29) in the upper end (30) of the seat (21), **in that** the bore (28) suitably has a larger diameter than the -groove (24), and **in that** the spacing piece is provided with a through axial bore (31), along which the spindle part (17) can be moved, e.g. with slip fit.

7. A valve according to claim 6, **characterized in that** the spacing piece (26) has a neck (32) and an upper flange-like end (33), which along its periphery is provided with an axial toothing (34) and which is designed to constitute fastening means for the handwheel (5).

8. A valve according to claim 7, **characterized in that** the handwheel (5), which mainly is made of a plastic material, by means of a lower seat (35) is inserted onto the upper end (33) of the spacing piece, the seat in a few locations along its periphery suitably being slit in order to obtain tongues (36) with inwardly directed claws (37), which surround the upper end (33) of the spacing piece and prevent the handwheel from being drawn out.

9. A valve according to claim 8, **characterized in that** the inner side of the seat and suitably also the tongues is provided with an axial toothing (38), which matches the described toothing of the spacing piece , in order to attach the handwheel to the spacing piece in a certain definite adjustment position, which is secured thanks to the toothing , and **in that** the toothings and the adjacent parts of the toothings respectively preferably are provided with bevels, which facilitate the bringing together of said components.

10. A valve according to claim 9, **characterized in that** the handwheel (5) comprises a handwheel body (39), to which a handwheel cover (40) is to be attached having a peripheral wall (41) and an end wall (42), from which said dowel (43) projects through the bore (31) of the spacing piece and into the blind hole (19) of the spindle and which preferably is provided with a central, axial through cavity (44), the part of which , which faces the spindle, being provided with a thread (45) in order to receive a threaded bolt (46) with an axial, e.g. through hexagon opening (47) in order to allow an insertion of an adjustment tool, which can be inserted into the handwheel through a hole (48) in said end wall (42), **in that** the bolt (46) is designed to be used as a stop for the opening movement of the cone, and **in that** the cone is movable, the outer side of the dowel (43) being provided with an axial toothing (50), which matches the toothing (49) of the blind hole (19).

## Patentansprüche

1. Ein Ventil (1), besonders ein Ausgleichsventil für Zentralheizungsanlagen, das einen Ventilkörper oder Konus (2) umfasst, der an einem Ende einer Spindel (3) befestigt ist, die in einem Oberteil (4) geführt wird, wobei das andere Ende der Spindel ein Handrad (5) stützt, wobei der Konus voreingestellt werden soll, bevor er schließlich gegen eine Aufnahme eingestellt wird, die in ein Ventilgehäuse montiert ist, **gekennzeichnet dadurch, dass** der Mittelteil der Spindel (3) mit einem in Bezug auf seine Länge vorzugsweise kurzen Außengewinde (16) ausgestattet ist und mit diesem Teilstück, auf der Ventilkörperseite, in ein Innengewinde (20) in einem Verbindungsstück oder verbindungsstückähnliches Teil (21) in besagtem Oberteil (4) eingefügt ist, dass das Verbindungsstück oder Ähnliches (21) von einem flanschähnlichem Teil (22) umschlossen ist, wodurch besagtes Oberteil (4) in das Ventilgehäuse eingefügt und dort gehalten wird, dass die axiale Fortsetzung des Verbindungsstück oder Ähnlichem (21), auf der Handradseite, eine kurze Engstelle (23) bildet, wobei das freie Ende der Spindel (3), das an der Außenseite glatt ist, axial verschiebbar mit Gleitsitz geführt wird und dass die Spindel (3) mit dem Handrad (5) verbunden ist, um Bewegungen durch einen Dübel (43) zu übertragen, der aus dem Handrad vorspringt, sowie dadurch, dass das freie Ende des Dübels verhältnismäßig beweglich in einem Grundloch (19) im Ende (18) der Spindel nahe besagtem Handrad geführt wird.

2. Ventil nach Anspruch 1, **gekennzeichnet dadurch, dass** der Öffnungsbereich des Grundlochs (19) mit einer axialen Innenverzahnung (49) ausgestattet ist, in die der Handraddübel (43) mit einer zusammenpassenden Außenverzahnung (50) eingefügt wird.

3. Ventil nach Anspruch 1 oder 2, **gekennzeichnet dadurch, dass** der Konus (2), wie an sich bekannt, eine obere Platte (6) aufweist, gegen deren Unterseite (7) eine Führungs- und Dichtungsplatte (8) mit einem etwas kleineren Durchmesser anschlägt, sowie dadurch, dass in der Unterseite der Platte (6) eine nach unten offene Ringnut (14) vorgesehen ist, um einen O-Ring (15) aufzunehmen, welcher unbeladen um einen bestimmten Abstand von der Nut nach außen ragt, von der die Hälfte von dem Randbereich der Oberseite der Platte (8) bedeckt wird, und dass der O-Ring (15) komprimiert zu wird und überschüssiges Material aus dem nicht bedeckten Teil der Ringnut (14) herausschiebt.

4. Ventil nach einem beliebigen der Ansprüche 1-3, **gekennzeichnet dadurch, dass** besagte obere Platte (6) und besagte Dichtungsplatte (8) mittels zentraler Bohrungen (9 und 10) mit Gleitsitz oder Presspassung auf das untere Ende der Spindel gefüllt und in ihren Positionen gesichert werden, z.B. indem das freie Spindelende ein kleines Stück weit in einen Hohlraum (11) in der Unterseite der Dichtungsplatte (8) erweitert wird und indem man es dort biegt, während die Oberseite (12) der oberen Platte (6) an einen Flansch (13) am Ende der Spindel anschlägt, und/oder dadurch, dass die Dichtungsplatte (8) und/oder die obere Platte (6) auf die Spindel geschraubt werden, sowie dadurch dass die Verbindung zwischen der Spindel und dem Konus vorzugsweise abnehmbar ist, so dass der Konus gestattet oder teilweise ausgetauscht werden kann.

5. Ventil nach Anspruch 1, **gekennzeichnet dadurch, dass** die Spindel (3) in dem Bereich des Außengewindes (16) verdickt ist.

6. Ventil nach Anspruch 5, **gekennzeichnet dadurch, dass** mit besagter Engstelle (23) nach oben eine oben offene Ringnut (24) verbunden ist, in welche ein O-Ring (25) eingefügt wird, der zwischen der radialen Nutwand und dem Spindelteil (17) komprimiert werden soll, um eine effiziente Dichtungswirkung zu erhalten, dadurch, dass die Nut (24) von oben von einer der Endflächen (27) auf einem Abstandsstück (26) bedeckt wird, das mit seinem unteren zweckmäßigerweise flanschähnlichen Ende (28) in eine Phasenbohrung (29) in dem oberen Ende (30) der Aufnahme (21) geschraubt wird, dadurch, dass die Bohrung (28) zweckmäßigerweise einen größeren Durchmesser hat als die Nut (24), sowie dadurch, dass das Abstandsstück mit einer Durchgangs-Axialbohrung (31) ausgestattet ist, entlang der das Spindelteil (17) bewegt werden kann, z.B. mit Gleitsitz.

7. Ventil nach Anspruch 6, **gekennzeichnet dadurch, dass** das Abstandsstück (26) einen Hals (32) hat und ein oberes flanschähnliches Ende (33), das entlang seines Umfangs mit einer axialen Verzahnung (34) ausgestattet ist und das ein Befestigungsmittel für das Handrad (5) bilden soll.

8. Ventil nach Anspruch 7, **gekennzeichnet dadurch, dass** das Handrad (5), das vorwiegend aus einem Kunststoff besteht, mittels einer unteren Aufnahme (35) auf dem oberen Ende (33) des Abstandsstücks eingefügt wird, wobei die Aufnahme an einigen Stellen entlang ihres Umfangs zweckmäßigerweise eingeschnitten ist, um Laschen (36) mit nach innen gerichteten Krallen (37) zu erhalten, die das obere Ende (33) des Abstandsstücks umgeben und das Handrad daran hindern, herausgezogen zu werden.

9. Ventil nach Anspruch 8, **gekennzeichnet dadurch, dass** die Innenseite der Aufnahme und zweckmäßigerweise auch die Laschen mit einer axialen Verzahnung (38) ausgestattet sind, die in die beschriebene Verzahnung des Abstandsstücks passt, um das Handrad an dem Abstandsstück in einer bestimmten eindeutigen Einstellungsposition anzubringen, die dank der Verzahnung befestigt ist, sowie dadurch, dass die Verzahnungen bzw. die anliegenden Teile der Verzahnungen vorzugsweise mit Fasen ausgestattet sind, die das Zusammenbringen von besagten Bestandteilen erleichtern.

10. Ventil nach Anspruch 9, **gekennzeichnet dadurch, dass** das Handrad (5) einen Handradkörper (39) umfasst, an dem eine Handradabdeckung (40) mit einer Randwand (41) und einer Endwand (42) angebracht werden soll, von der aus der Dübel (43) durch die Bohrung (31) des Abstandsstücks ragt und in das Grundloch (19) der Spindel und die vorzugsweise mit einem zentralen axialen Durchgangshohlraum (44) ausgestattet ist, dessen der Spindel gegenüberliegende Teil mit einem Gewinde (45) ausgestattet ist, um einen Gewindebolzen (46) mit einer axialen, z.B. Durchgangs-Sechsecköffnung (47) aufzunehmen, um die Einfügung eines Einstellungswerkzeugs zu gestatten, das in das Handrad durch ein Loch (48) in besagter Endwand (42) eingefügt werden kann, dadurch, dass der Bolzen (46) als Halt für die Öffnungsbewegung des Konus verwendet werden soll, sowie dadurch, dass der Konus beweglich ist, wobei die Außenseite des Dübels (43) mit einer axialen Verzahnung (50) versehen ist, die in die Verzahnung (49) des Grundlochs (19) passt.

## Revendications

1. Soupape (1), en particulier soupape d'équilibrage pour des installations de chauffage central, qui comprend un corps ou un cône de soupape (2) fixé à une extrémité d'une tige de manoeuvre (3) guidée dans une pièce supérieure (4), l'autre extrémité de la tige de manoeuvre supportant un volant de manoeuvre (5), le cône étant conçu pour être soumis à un préréglage avant d'être réglé de manière définitive par une mise en contact avec un siège monté dans un boîtier de soupape, **caractérisée en ce que** la partie centrale de la tige de manoeuvre (3), par rapport à sa longueur, est munie d'un filetage externe (16) de préférence court, et est insérée, avec cette portion, du côté occupé par le corps de la soupape, dans un filetage interne (20) réalisé dans un raccord ou dans un élément analogue à un raccord (21), dans ladite pièce supérieure (4), **en ce que** ledit raccord ou analogue (21) est entouré par une partie en forme de bride (22) au moyen de laquelle ladite pièce supérieure (4) vient s'insérer dans ledit boîtier de soupape pour y être retenue, **en ce que** le prolongement axial dudit raccord ou analogue (21), du côté occupé par le volant de manoeuvre, forme un rétrécissement court (23) dans lequel l'extrémité libre de ladite tige de manoeuvre (3), ladite extrémité étant lisse à l'extérieur, est guidée en direction axiale de façon à se déplacer en ajustage par glissement, et **en ce que** ladite tige de manoeuvre (3) est raccordée au volant de manoeuvre (5) dans le but de transférer des mouvements, via une goupille de positionnement (43) qui fait saillie par rapport au volant de manoeuvre, et **en ce que** l'extrémité libre de ladite goupille de positionnement est guidée, conformément à un déplacement relatif, dans un trou borgne (19) pratiqué dans l'extrémité (18) de la tige de manoeuvre, à proximité dudit volant de manoeuvre.

2. Soupape selon la revendication 1, **caractérisée en ce que** la zone d'entrée du trou borgne (19) est munie d'une denture interne axiale (49) dans laquelle vient s'insérer ladite goupille de positionnement (43) du volant de manoeuvre avec une denture externe correspondante (50).

3. Soupape selon la revendication 1 ou 2, **caractérisée en ce que** le cône (2), comme il est connu en soi, possède une plaque supérieure (6), contre le côté inférieur (7) duquel vient buter une plaque de guidage et d'étanchéité (8) possédant un diamètre quelque peu inférieur, et **en ce que**, dans le côté inférieur de la plaque (6), on prévoit une rainure annulaire (14) ouverte vers le bas, conçue pour que vienne s'y loger un joint torique (15) qui, à l'état non chargé, fait saillie vers l'extérieur sur une certaine distance par rapport à la rainure dont la moitié est recouverte par la zone périphérique du côté supérieur de la plaque (8), et **en ce que** ledit joint torique (15) est prévu pour être comprimé et pour repousser la matière en excès hors de la partie non couverte de ladite rainure annulaire (14).

4. Soupape selon l'une quelconque des revendications 1 à 3, **caractérisée en ce que** ladite plaque supérieure (6) et ladite plaque d'étanchéité (8), au moyen d'alésages centraux (9 et 10) viennent se disposer, via un ajustage par glissement ou par serrage, sur l'extrémité inférieure de la tige de manoeuvre et s'y fixer dans leurs positions par exemple en permettant à l'extrémité libre de la tige de manoeuvre de s'étendre sur une petite distance dans une cavité (11) pratiquée dans le côté inférieur de la plaque d'étanchéité (B) et de la plier à cet endroit, tandis que le côté supérieur (12) de la plaque supérieure (6) vient buter contre une bride (13) sur l'extrémité de la tige de manoeuvre, et/ou **en ce que** la plaque d'étanchéité (8) et/ou la plaque supérieure (6) sont vissées sur la tige de manoeuvre, et **en ce que** le joint entre la tige de manoeuvre et le cône est conçu de préférence pour être amovible, ce qui permet de procéder à un échange complet ou partiel du cône.

5. Soupape selon la revendication 1, **caractérisée en ce que** la tige de manoeuvre (3) est épaissie dans la zone dudit filet de vis externe (16).

6. Soupape selon la revendication 5, **caractérisée en ce qu'**audit rétrécissement (23), dans sa partie supérieure, vient se raccorder une rainure annulaire (24) ouverte vers le haut, dans laquelle vient s'insérer un joint torique (25) qui est conçu pour être comprimé entre la paroi de rainure radiale et ladite partie (17) de la tige de manoeuvre afin d'obtenir un effet d'étanchéité efficace, **en ce que** la rainure (24), à partir du haut, est recouverte par une des surfaces terminales (27) d'une pièce d'écartement (26) avec laquelle, son extrémité inférieure (28), de manière appropriée en forme de bride, est fixée dans un alésage à grain (29) pratiqué dans l'extrémité supérieure (30) du siège (21), **en ce que** l'alésage (28), de manière appropriée, possède un diamètre supérieur à celui de la rainure (24), et **en ce que** la pièce d'écartement est munie d'un alésage axial de passage (31) le long duquel peut se déplacer la partie (17) de la tige de manoeuvre, par exemple en ajustage par glissement.

7. Soupape selon la revendication 6, **caractérisée en ce que** la pièce d'écartement (26) possède un collet (32) et une extrémité supérieure (33) en forme de bride, extrémité qui, le long de sa périphérie, est munie d'une denture axiale (34) et qui est conçue pour constituer un moyen de fixation pour le volant de manoeuvre (5).

8. Soupape selon la revendication 7, **caractérisée en ce que** le volant de manoeuvre (5), qui est constitué principalement d'une matière plastique, au moyen d'un siège inférieur (35), vient s'insérer sur l'extrémité supérieure (33) de la pièce d'écartement, le siège, à un certain nombre d'endroits le long de sa périphérie, étant muni, de manière appropriée, de fentes afin d'obtenir des languettes (36) comportant des griffes (37) orientées vers l'intérieur, qui entourent l'extrémité supérieure (33) de la pièce d'écartement et qui s'opposent à une traction du volant de manoeuvre vers l'extérieur.

9. Valve selon la revendication 8, **caractérisée en ce que** le côté interne du siège et, de manière appropriée, également des languettes, est muni d'une denture axiale (38) qui correspond à la denture décrite de la pièce d'écartement, dans le but de fixer le volant de manoeuvre à la pièce d'écartement dans une certaine position d'ajustement défini, qui est fixe grâce aux dentures, et **en ce que** les dentures et les parties adjacentes des dentures respectivement sont munies de préférence de chanfreins qui facilitent l'emboîtement desdits composants.

10. Valve selon la revendication 9, **caractérisée en ce que** le volant de manoeuvre (5) comprend un corps de volant de manoeuvre (39) contre lequel doit venir se fixer un recouvrement (40) de volant de manoeuvre possédant une paroi périphérique (41) et une paroi terminale (42) par rapport à laquelle ladite goupille de positionnement (43) fait saillie à travers l'alésage (31) de la pièce d'écartement pour pénétrer dans le trou borgne (19) de la tige de manoeuvre, et qui, de préférence, est munie d'une cavité axiale centrale de passage (44) dont la partie orientée vers la tige de manoeuvre est munie d'un filet de vis (45) destiné à recevoir un boulon fileté (46) comportant une ouverture de passage axiale (47), par exemple hexagonale prévue pour permettre un outil d'ajustement de venir s'y insérer, ce dernier pouvant venir s'insérer dans le volant de manoeuvre à travers un trou (48) pratiqué dans ladite paroi externe (42), **en ce que** le boulon (46) est conçu pour être utilisé comme arrêt pour le mouvement d'ouverture du cône, et **en ce que** le cône est mobile, le côté externe de la goupille de positionnement (43) étant muni d'une denture axiale (50) qui correspond à la denture (49) du trou borgne (19).
